Europäisches Patentamt

European Patent Office

Office européen des brevets

(19)

(11) Publication number: **0 089 246**
**A1**

## (12) EUROPEAN PATENT APPLICATION

(21) Application number: **83301476.4**

(22) Date of filing: **17.03.83**

(51) Int. Cl.³: **A 01 G 9/14**

(30) Priority: **17.03.82 GB 8207842**

(43) Date of publication of application:
**21.09.83 Bulletin 83/38**

(84) Designated Contracting States:
**AT BE CH DE FR GB IT LI LU NL SE**

(71) Applicant: **Broughton, Geoffrey Michael**
**41 Pinewood Road**
**Eaglescliffe Cleveland, TS16 OAJ(GB)**

(72) Inventor: **Broughton, Geoffrey Michael**
**41 Pinewood Road**
**Eaglescliffe Cleveland, TS16 OAJ(GB)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **Ground-based structures.**

(57) A low-level, compact and thermally efficient greenhouse comprises north and south-facing walls (2) and (4) and a three-quarter span roof (3, 5). A moulded pit portion (8) is sunken below ground level (1) and defines steps (10) and an upper mouth (9). A person can enter the greenhouse via door (2) and panel (13) and can enter the pit portion (8). The person can stand upright in the pit portion (8) without having to bend and has manual access to a planted area between the mouth (9) and the walls of the greenhouse.

FIG. 2

EP 0 089 246 A1

0089246

## GROUND-BASED STRUCTURES

This invention relates to ground-based structures and is particularly, although not exclusively, applicable to greenhouses.

One example of a ground-based structure is a greenhouse, which comprises light-transmissive panels of glass or glass substitute, which is large enough to be entered by a gardener or horticulturalist and is intended for the cultivation of plants. Purposes of a greenhouse are: to make it possible to grow plants which are too tender to be cultivated in the open air; to encourage plants to make their growth at an earlier date than they would otherwise do; and to provide congenial conditions for the raising of seeds and the rooting of cuttings.

Greenhouses are of many different types. They may be classified according to the method of construction of the roof, which is termed a span roof when both roof sides slope either to ground level or to approximately the same height above ground level, three-quarter or hip-span when the roof on one side comes nearer to ground level than that on the other, and lean-to when the roof slopes in one direction only, the reverse side of the greenhouse being formed on a wall of another building. In this latter case the wall may be a house wall containing a house door. In this way the greenhouse may form an attractive extension to a main house building.

In the United Kingdom, even with our limited number of sunny days, we receive an average of 2½ kw. hrs of energy from the sun on every square metre (approximately 11 square feet) of earth, every day of the year. If one considers a greenhouse of plan size 2.5m x 3m (approximately 8ft x 10ft) the energy received by the structure is in excess of 18 kw.hrs of energy on average, per day. In terms of electricity cost, this would amount to at least £300 sterling at today's prices.

Solar energy collectors, far from being modern technology, have been with us for many years - in the form of the greenhouse. However, the principles by which greenhouses collect and retain solar energy have been neglected as far as improvements in greenhouse design are concerned.

The greenhouse effect is the name given to a major way in which solar energy is collected, and is the phenomenon applied to the majority of solar energy collection systems.

During daylight hours, especially sunny ones, the greenhouse effect is satisfactory for providing heat, but as soon as night falls the temperature will soon drop unless the energy acquired during daylight hours can be stored.

Heat energy can be stored in a variety of ways. More common ways in which we do this are demonstrated by the use of hot water bottles (the water stores the heat), and electric storage heaters where cheap night rate electricity is used to warm bricks which store heat which is given-off during the day.

Within a glazed structure the same heat-storage materials can be used, however we already have a heat store in the form of the floor of the greenhouse or glazed structure. Earth or concrete will store heat providing it is allowed to be warmed at least to some extent by the sun's rays, and benches are not placed over the floor area. In the 2.5m x 3m (8ft x 10ft) greenhouse type structure even the uppermost 10cm (4 inches) of soil or concrete will have stored within it 0.75 kw.hr of heat energy for every one centigrade degree that the floor is warmer than the outside temperature. At nightfall this stored heat would be gently given up to the interior. Heat losses would also occur at the outside perimeter of the greenhouse to the surrounding ground area - this is why larger greenhouse structures generally retain their heat for longer periods at nightfall. Further heat loss, though less significant, can also be expected to the earth at deeper levels, but one way or another one will eventually benefit as this heat will be given back to the surface at a later date, for example in the winter when the air in the greenhouse cools.

It will be appreciated that many different types of ground-based structure can operate, as regards heat-collection properites, on the greenhouse principle. Such structures need not necessarily be garden or horticultural greenhouses.

Thus, for example, the greenhouse principle of heat collection could be employed in a ground-based structure used for breeding fish or other animal life, or in such a structure which is developed for any sort of leisure or occupational activity which requires a warm and efficiently heated environment. Thus, such a structure could be employed as a do-it-yourself workshop, a teenager's den or even as an astronomical observatory. The present invention is applicable to all these different types of structure, and others.

According to the present invention there is is provided an erect or erectable ground-based structure comprising: an above-ground portion which is adapted to extend above and over the ground when the structure is erect and which comprises light-transmissive regions; and an enterable pit portion which is adapted to extend below ground when the structure is erect, the pit portion having an upper mouth having a lateral extent which is less than that of the above-ground portion of the structure such that when the structure is erect there will be at the upper mouth of the pit portion an area which is outside the upper mouth of the pit portion and which is covered by the above-ground portion of the structure, being an area which is manually accessible by a person who has entered, and is in, the pit portion.

An embodiment of the present invention may employ to advantage the heat retentive properties of the ground. Thus, the area which is manually accessible outside the pit may be at ground level or near to it, and heat retained in the ground, previously received through the light-transmissive regions, may keep the interior of the structure in general, and said area in particular, warm when the sun has stopped shining.

Because a person in the structure may be standing in the pit, the above-ground portion of the structure may be kept low and therefore closer to the ground than it would have to be if the pit were not provided. This lower structure can reduce the necessary interior volume and therefore reduce the air volume which needs to be kept warm. Also, the upper regions of the structure will be nearer to the heat-retentive ground than they would be if no pit were provided. All this makes for more efficient heating of the interior of the structure throughout.

Sunlight may be relied on alone for heating, or auxiliary heating (possibly within the ground) could be provided electrically or by propane.

Preferably, the pit portion is provided by a moulded liner.

The above-ground portion may be secured to the pit portion. This may avoid the necessity for conventional foundations for the structure as a whole.

The pit portion may comprise means for use in preventing uplift from the ground.

The pit portion preferably may comprise steps for access into and out of the pit portion.

The above-ground portion may comprise, for access to the pit portion, a door and a roof panel.

The above-ground portion may comprise a removable panel for acess to said area from outside the ground-based structure.

Preferably, the depth of the pit portion and the internal height of the above-ground portion are such that a person may stand in the pit without bending,

0089246

The steps may be wholly within the above-ground portion when the structure is erect.

The uppermost step may provide a threshold which will project above ground level with the upper mouth of the pit portion to avoid ingress of water etc. into the pit portion.

In one embodiment, when the structure is erect the pit portion and/or adjacent ground or other material can be heated by solar energy by the provision of a reflective surface on at least one inner wall of the above-ground portion of the structure, for example the north wall, for the purpose of storage of heat in the pit portion and/or the adjacent ground or other material,

The pit portion may incorporate within it heat-retentive salts for the improvement of its heat storage capacity. Such salts are presently commercially available. They may in addition be employed in the ground or other material around the pit portion, again to improve heat retention properties.

The structure may be a greenhouse. Said area may be substantially at ground level or above it.

An embodiment of the present invention may comprise several advantageous features, all of which may be considered as developments of the basic inventive concept. Thus, for a better understanding of the invention and to show how it may be put into effect reference will now be made by way of example to the accompanying drawings in which:

Figure 1 shows in side view a greenhouse according to the present invention;

Figure 2 shows a sectional side view;

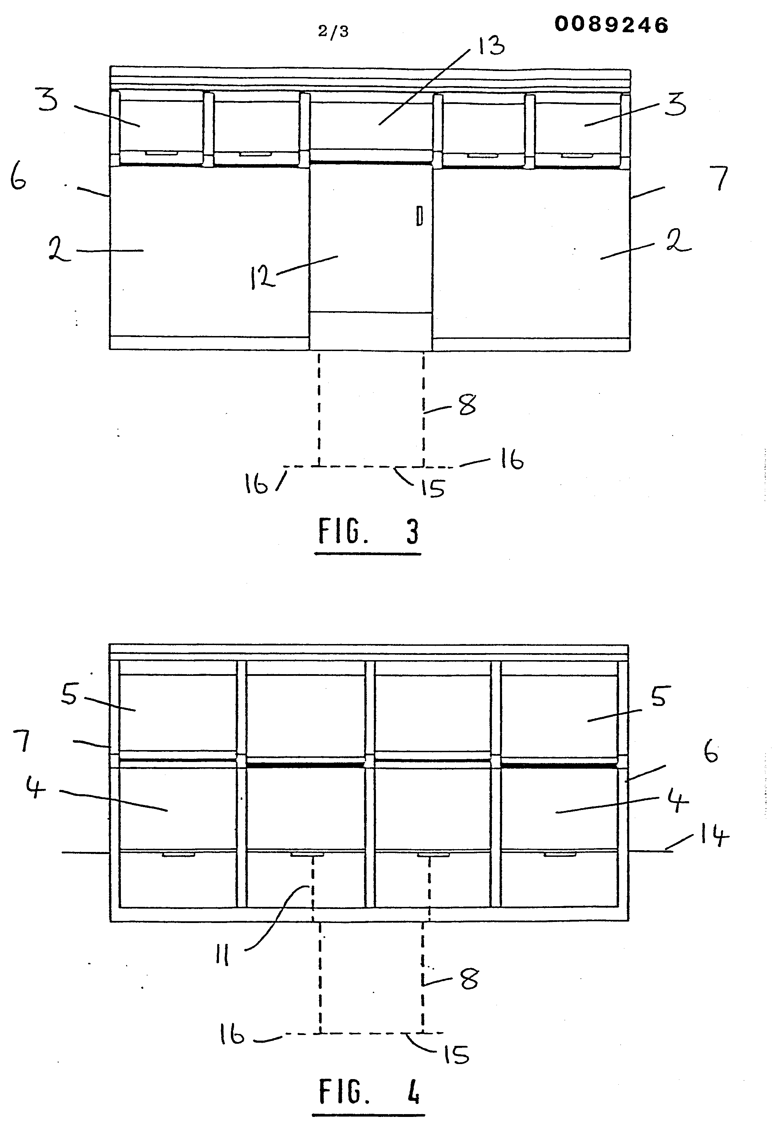

Figure 3 shows a back view of the greenhouse;

Figure 4 shows a front view of the greenhouse;

Figure 5 is a plan view of the greenhouse at ground level; and

Figure 6 is another plan view of the greenhouse at ground level.

The Figures shows a ground-based greenhouse according to the invention when in an erect condition. Ground level is indicated by a horizontal line 1.

An above-ground portion of the erect greenhouse provides an overhead enclosure which extends above and over the ground and comprises a timber frame with the configuration as shown, to which glass panels are secured. This is generally conventional greenhouse arrangement of the three-quarter span type. The greenhouse comprises a preferably north-facing wall 2 and a roof region 3 extending from this wall to the apex of the greenhouse. A preferably south-facing wall 4 is adjoined by a roof region 5 which also extends up to the apex of the greenhouse. The sides of the greenhouse are constituted by east-facing and west-facing walls 6 and 7 respectively.

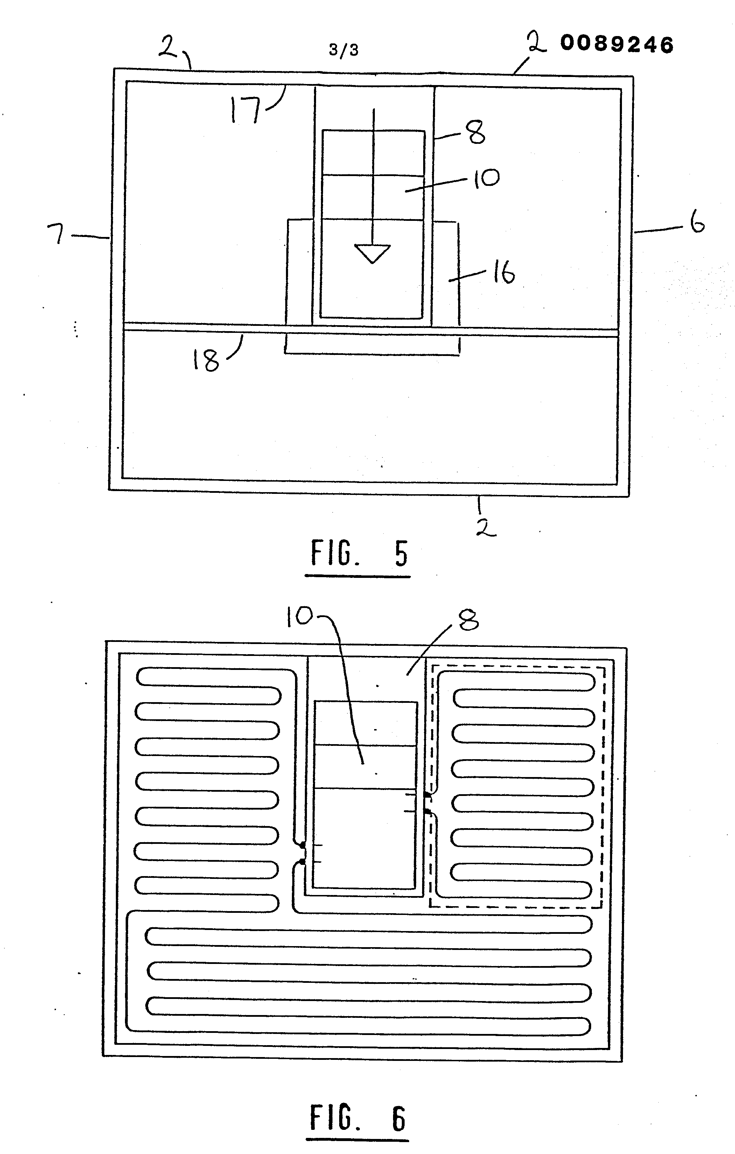

The greenhouse further comprises a pit portion 8 which is enterable by the gardener. The pit portion 8 has an upper mouth 9 having a lateral extent which is less than that of the above-ground portion of the greenhouse.   There is at the upper mouth 9 of the pit portion 8 an area which is outside the upper mouth 9 and which is covered by the above-ground portion of the greenhouse, so as to be an area which is manually accessible by a gardener who has entered, and is in, the pit portion 8.   This area is seen to be substantially U-shaped in plan (Figures 5 and 6).

There is attached to the upper north-facing edge of the pit portion 8 a door threshold 8a which is provided above ground level with a flap to prevent water ingress.

The greenhouse comprises a standing area provided by the pit portion 8, the level of which is excavated to be below ground level to a depth which allows the natural ground level to be utilised as either a propagating surface or  a level on which to form a propagating surface,

The excavation which must be made to receive the pit portion 8 is suitably lined by the pit portion 8, which may be a formed liner such as a moulded re-inforced glass fibre structure, but not excluding any other plastics material.  Also a concrete, brick or blockwork pit portion 8 is possible.  The pit portion 8 defines steps 10 into the pit for accesss purposes.  The pit portion 8 must be so  constructed as to be impervious to moisture,  The moulded pit portion 8 comprises a peripheral lip 11 which may protrude above natural ground level and prevents ingress or slippage of materials to within the pit,

Integrated within the moulded pit portion 8 may be either stanchions for supporting the overhead enclosure, or connections for attaching such stanchions. As and when necessary, provision may also be made for subterranean connections to the moulded pit portion 8 to prevent uplift of the same due to forces exerted by an exterior water table level,  In fact, more preferred alternative measures to these are later described for securing the pit portion 8 to the greenhouse frame and for preventing uplift.

The pit which is formed by the moulded pit portion 8 should be of minimum proportions for a working area and will be surrounded by an area of ground which will be used for the purposes of horticultural propagation. The width of the surrounding soil area, i.e. that distance extending perpendicularly from the sides of the lip 11 of the pit portion 8, may be suitably great to accommodate a good number of plants, but not so excessive as to impede reaching over the area from the pit for the purposes of propagation. The shape of the pit portion 8 in plan, will generally be oblong with the access steps 10 descending from a shorter side of the oblong. At the top of the steps 10 an access door 12 should be provided, in the north-facing wall 2 of the overhead enclosure of the greenhouse.

The overhead enclosure may be of sufficient height so as to enable a person to stand in the pit portion 8 or working area without having to bend over.

This might necessitate access to the steps 10 through the door 12 to be facilitated by a section 13 of the roof region 3 above the door 12 and above the steps 10 into the pit to be openable, for example by being hinged, sliding or otherwise. This could also form a ventilation opening.

The overhead enclosure is in the form substantially of translucent or transparent lights (windows) and is generally in the form of a three-quarter span arrangement, the higher of the walls being north facing. The framework of the lights can be made of alternative material as in conventional greenhouse manufacture, but should be of ample proportions in order that the lights are removable so that direct access can be obtained to the propagating area from the ground level outside. This is to facilitate reconstruction or re-constitution of the propagating area possibly by the use of a rotavator if required.

Provisions can be made for secondary containment of the air above the growing surface by internal lights tied between the overhead structure and supporting stanchions.

Provision is inherently made possible for the installation of soil warming devices i.e. cables, pipes etc.

Provision can also be made for the installation of misting devices.

It is also possible to construct several greenhouses side by side, each having individual personnel access from ground level.

The major source of heat loss in a glazed structure is through the glass or glass substitute. To benefit from the greenhouse effect, glass or similar transparent material ought to be used (incidentally, not all transparent plastics will give such a noted effect as glass, polythene being a prime example). Therefore the necessary glazed area must be carefully analysed to give the optimum effect. North facing sides are obviously not anywhere near as important as south facing sides. Glazed areas which will not benefit warming of a heat store are also less important.

The insulation performance of the glazed area can also be improved by various double glazing or twin skin arrangements either in plastics or in a combination of glass and plastics. However, suffice to say that many of these arrangements reduce the strength of the sun's rays penetrating the glazed area quite dramatically.

The transparent areas of the structure may be reduced to a minimum and this reduces heat loss and facilitates the comparative ease and economy of fitting

0089246

double glazing or manually or automatically controlled exterior insulation and/or shading blinds.

This reduction in transparent area may be achieved by the whole of the north wall 2 being timber clad, and by the other three walls also being timber clad below a level 14. The north wall 2 can be further insulated by an inner cladding of insulation board with a reinforced aluminium foil laminated onto it to reflect the solar rays which fall on the inner north wall back into the inside of the greenhouse.

Considering now the construction of the moulded pit portion 8 in more detail, it comprises in this embodiment at its bottom surface 15 a laterally extending flange 16 which is provided for preventing the sunken pit portion 8 from being uplifted owing to external pressure produced for example by excessively high water tables. The flange 16 can be made detachable to allow stacking of several moulded pit portions 8 within one another during transit.

At the time of erection, a hole is excavated for the pit portion 8 which is sufficiently wide to allow for the flange 16. After insertion of the moulded pit portion into the ground, soil, concrete or other such material is loaded or backfilled onto the flange 16, which extends on three sides of surface 15.

The moulded pit portion 8 is, in this particular embodiment, bolted to two cross-members 17 and 18 of a ground frame of the overhead structure, using two or more bolts at each side. This in effect secures the overhead structure to the moulded pit portion 8, avoiding the necessity for more conventional foundations around the perimeter of the overhead structure.

The colour of the moulded pit portion 8 should be dark in order to absorb solar heat energy and hence transfer that energy into the adjacent earth or concrete or other such material in order to store that heat energy,

The moulded pit portion 8 may be provided with an upper ledge (not shown) in order to enable a portable work surface to be placed across part of the interior of the pit portion 8. A lower ledge (not shown) could be provided to support a portable seat across part of the interior of the mould. An even lower ledge (not shown) could be provided to enable a raised pit floor to be provided. Any such ledges would provide lateral strength to the sides of the mould.

If desired, the moulded pit portion 8 could be extended laterally outward from its lip 11 to the outside bottom perimeter of the overhead structure to exclude soil from the interior. Seats, trays, worktops and other compartments could be moulded into the extension of the moulded pit portion for the purposes of providing furniture, trays for fishkeeping, animals etc, or for compartments for tools etc.

It is to be appreciated that where the greenhouse is employed for horticultural purposes, the natural ground may be employed for these purposes, or additional soil or other material such as peat may be laid on top of the natural soil for these purposes, provided of course its level remains below that of the upper mouth 9 of the pit portion 8.

Figure 6 shows a plan view of the greenhouse in which are shown the conductors of two electrical soil warming systems. The cross member 18 is omitted for the sake of clarity. These conductors may extend directly in soil, whether in the natural ground or material laid on top of the natural ground (see e.g. Figure 2) possibly separated from the natural ground by sheets of thermal insulation. In some cases this material could be sand with soil ontop. In-soil heating enables the air temperature to be substantially reduced with safety. Because of the high insulation properties of soil, less energy is required to maintain that temperature.  Also the heat is applied where it is most effective - at root level,  The soil warming systems are controlled by thermostats mounted in the two sides of the pit portion moulding 8.

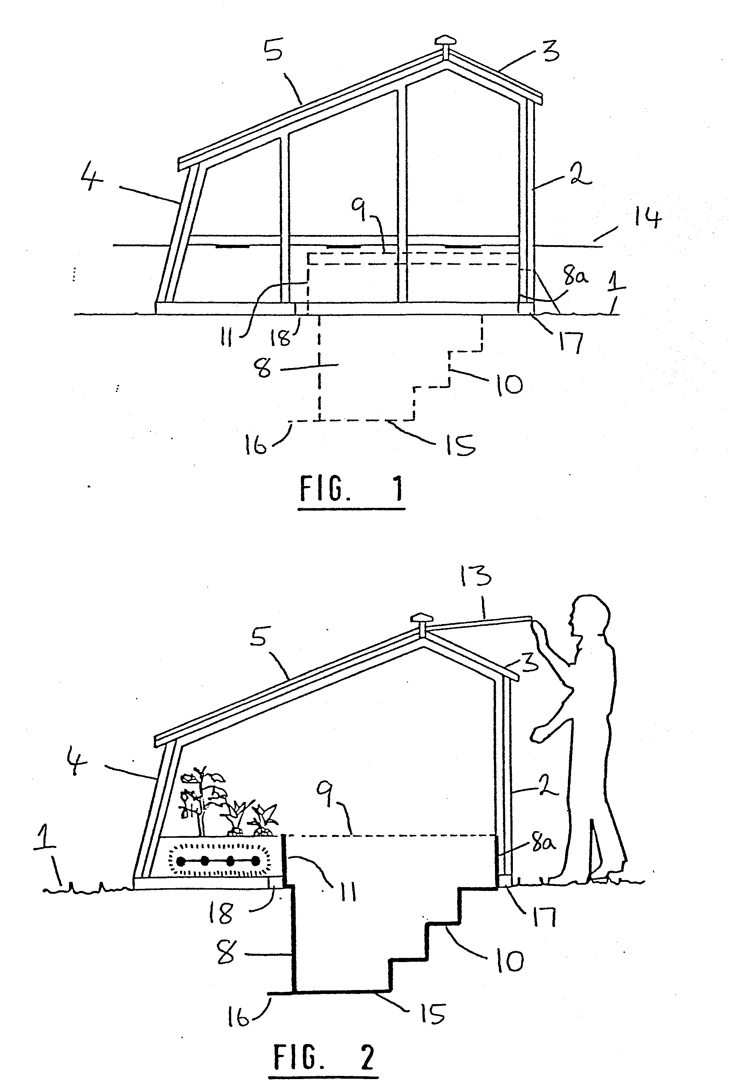

To give some idea of the dimensions of a typical greenhouse as illustrated and described, the overall ground dimensions could be say 2395mm by 3080mm, with the height  of north wall 3 being 1385mm and apex height above ground level being 1648mm.  As for the pit portion 8, its overall plan dimensions (as seen in Figure 5) could be 1330mm by 700mm.  Its maximum depth below ground  level as seen in Figure 1 could be 660mm, with the height of its mouth 9 above ground level being 300mm.  The very approximate relative sizes of such a greenhouse and an average adule male can be seen in Figure 2.

In an alternative form of above-ground structure the greenhouse could be adapted to provide a lean-to or conservatory type structure, possibly for extending a house, as described in the opening paragraphs of this specification.

The overall concept of the described and illustrated structure is to provide a construction of a building for the purpose, for example, of horticultural propagation with far reduced running costs from the point of view of energy requirement,  The structure can also be used for other purposes, as described earlier in this specification.  The  structure is of modular construction which can be used by domestic households or integrated to form more extensive commercial units.  The overall ergonomically designed unit with the built-in inherent possibilities of creating precise conditions of moisture and temperature coupled with reduced running costs makes the module superior to conventional greenhouse structure and extends greatly the possibilities afforded  by  the small bench mounted propagators currently available.

Thus, an attempt has been made to integrate modern achievements in horticultural propagation to provide a single self-contained module.

The described and illustrated structure has the following features and benefits.

a. A good saving in heating cost.

b. No benches to buy, offering a saving of up to £200 sterling.

c. No foundations required, that often awkward hidden extra when buying a conventional house.

d. Growing area of $60ft^2$ immediately convertable to an enclosed propagation or growing area using simple frames.

e. Thermostats or other controls can be mounted directly into side of pit portion moulding.

f. Conventional greenhouse application offering up to 5ft. growing height but total glazed area only 2/5ths of conventional glass to ground house giving pro-rata heating savings if space heating is utilized.

g. Good ventilation arrangement may be provided by provision of two openable dutch lights plus combined vent/access hatch 13.

h. All dutch lights and south frame may be rendered easily removable offering direct access with wheelbarrow, spade or other means for re-constitution of growing surface if required.

i. Thermally efficient ¾ span arrangement with boarded north aspect with optional further insulation fitted.

j. The more keen amateur semi professionals have shown a recent preference for timber for their greenhouses for its versatility for fixings, thermal insulation properties, and its aesthetic appeal. The present design reflects these qualities.

k.      No need to use growing area for potting up etc, - provision of ledges on pit portion moulding may enable a) a removable work top to be installed and b) a removable seat for the operator,

l.      Low aspect reduces cast shade, increases aesthetic appeal, fits well in garden surroundings.

m.      Easy installation of auto watering systems, mist units etc. - eventually leading to a fully automated greenhouse with all controls mounted in pit portion moulding.

The described and illustrated embodiment has been defined as a greenhouse, although as has been explained it could be adapted for many uses other than horticultural.

There may be provided a multi-purpose structure within which benches and furniture may be provided benefitting from ground support and in direct contact with a natural heat store, which also may reduce the cost of providing such furniture.

The glazed area may be reduced to a minimum for the purposes of conserving heat.

The structure does not impair the view of the user.

The structure benefits from solar energy gains for the purpose of heating.

The degree of glazing of the overhead structure can be altered to suit the application of its user. However for the full benefits of solar energy collection at least the south-facing roof and frontal area ought to be glazed. Other areas may be boarded, cladded and/or insulated

Conventional greenhouses depend on sunlight through glass or glass substitute for summer heat, making it difficult to avoid overheating on bright days and becoming ineffective on dull days. In winter, the cost of space heating may make the use of a greenhouse impractical for most gardeners. The described and illustrated structure may overcome these problems, by means of large openable lights or windows in roof region 5 to release excess heat, and economical in-soil heating for use when the soil would otherwise be cold.

It is to be understood that the protection conferred by the following claims extends to a structure when erect, and also before erection. Thus the claims may extend to manufacture and sale of a kit for making a structure. The claims are also intended to cover manufacture and sale of any substantial element alone of the structure. Thus for example the claims are further intended to cover a pit portion per se, the purchaser of which may himself build the remainder of the structure.

In general terms, there has been disclosed a low-level, compact and thermally efficient greenhouse comprising north and south-facing walls (2) and (4) and a three-quarter span roof (3, 5). A moulded pit portion (8) is sunken below ground level (1) and defines steps (10) and an upper mouth (9). A person can enter the greenhouse via door (2) and panel (13) and can enter the pit portion (8). The person can stand upright in the pit portion (8) without having to bend and has manual access to a planted area between the mouth (9) and the walls of the greenhouse.

0089246

Claims:

1,     An erect or erectable ground-based structure comprising: an above-ground portion which is adapted to extend above and over the ground when the structure is erect  and which comprises light-transmissive regions; and an enterable pit portion which is adapted to extend below ground when the structure is erect, the pit portion having an upper mouth having a lateral extent which is less than that of the above-ground portion of the structure such that when the structure is erect there will be at the upper mouth of the pit portion an area which is outside the upper mouth of the pit portion and which is covered by the above-ground portion of the structure,  being     an area which is manually accessible by a person who has entered, and is in, the pit portion.

2.     A structure according to claim 1, wherein the pit portion is provided by a moulded liner

3.     A structure according to claim 1 or 2, wherein  the above-ground portion of the structure is secured to the pit portion.

4,     A structure according to any preceding claim, wherein the pit portion comprises means for use in preventing uplift from the ground,

5.     A structure according to any preceding claim, wherein the pit portion comprises steps for access into and out of the pit portion.

6.     A structure according to any preceding claim, wherein the above-ground portion comprises, for access to the pit portion, a door and a roof panel,

7.     A structure according to any preceding claim, wherein the above-ground portion comprises a removable panel for access to said area from outside the ground-based structure,

8,     A structure according to any preceding claim, wherein the depth of the pit portion and the internal height of the above-ground portion are such that a person may stand in the pit without bending.

9.      A structure according to any preceding claim, which is a greenhouse.

10.      A structure according to any preceding claim, wherein said area is substantially at ground level or above it.

11.      A structure according to claim 5, or any of claims 6 to 10 when appended to claim 5, wherein the steps are wholly within the above-ground portion when the structure is erect.

12.      A structure according to claim 5 or 11, or any of claims 6 to 10 when appended to claim 5, wherein the uppermost step provides a threshold which will project above ground level with the upper mouth of the pit portion to avoid ingress of water etc. into the pit portion.

13.      A structure according to any preceding claim, wherein when the structure is erect the pit portion and/or adjacent ground or other material can be heated by solar energy by the provision of a reflective surface on at least one inner wall of the above-ground portion of the structure, for example the north wall, for the purpose of storage of heat in the pit portion and/or the adjacent ground or other material.

14.      A structure according to any preceding claim, wherein the pit portion incorporates within it heat-retentive salts for the improvement of its heat storage capacity.

0089246

FIG. 1

FIG. 2

0089246

FIG. 3

FIG. 4

0089246

FIG. 5

FIG. 6

**European Patent Office**

**EUROPEAN SEARCH REPORT**

0089246
Application number

EP 83 30 1476

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 378 440 (GEBHART)<br><br>* Page 2, line 32 - page 3, line 24; figures 1-3 * | 1,4,9, 10 | A 01 G 9/14 |
| | --- | | |
| A | US-A-4 249 340 (MAES)<br>* Column 3, line 4 - column 4, line 34; figures 1,2 * | 14 | |
| | --- | | |
| A | US-A-4 262 656 (ESPOSITO)<br>* Whole document * | 14 | |
| | ----- | | |

TECHNICAL FIELDS SEARCHED (Int. Cl. ³)

A 01 G

The present search report has been drawn up for all claims

| Place of search THE HAGUE | Date of completion of the search 24-06-1983 | Examiner HERYGERS J.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82